# EUROPEAN PATENT APPLICATION

(11) **EP 2 846 215 A2**
(43) Date of publication of application: **11.03.2015**
(21) Application number: 14179509.6
(22) Date of filing: 01.08.2014
(51) Int. Cl.: G05G 9/047, B60K 37/06, B62D 1/04

(54) **Operating device for vehicle**

(30) Priority: 09.08.2013 JP 2013166712
(71) Applicant: Honda Motor Co., Ltd., Tokyo 107-8556 (JP)
(72) Inventor: Suzuki, Takeyuki, Saitama, 351-0193 (JP); Okuyama, Haruko, Saitama, 351-0193 (JP); Shimada, Masahiko, Saitama, 351-0193 (JP); Tanaka, Hiroyuki, Saitama, 351-0193 (JP)
(74) Representative: Feller, Frank

(57) **Abstract**

This operating device for a vehicle includes: a holding portion provided at a steering wheel of the vehicle and adapted to be held by an operator; a first operation member provided on a surface of the holding portion, the first operation member having a first operating surface that is operatable by a finger of the operator through a contact operation and through a tilting operation; and a second operation member provided at a central portion of the first operating surface, the second operation member having a second operating surface that is operatable by the finger of the operator through a contact operation and through a pressing operation, wherein the first operating surface has an annular concave shape with the central portion being furthest recessed to an inside.

## Description

### BACKGROUND OF THE INVENTION

### Field of the Invention

The present invention relates to an operating device for a vehicle.

### Description of Related Art

A conventionally known vehicle control system (for example, refer to Japanese Unexamined Patent Application, First Publication No. 2012-224170) includes a template on the surface of the touch sensor. The template has an opening with a predetermined shape for regulating a finger tracing operation.

Another conventionally known touch-panel input operation device (for example, refer to Japanese Unexamined Patent Application, First Publication No. 2012-247890) is provided with an operation surface with an arc-shaped convex portion and a concave portion. The convex portion rises from a flat portion of the operation surface and forms the contour of the operation surface. The concave portion is provided inside of the convex portion and at the center portion of the operation surface. The concave portion is recessed from the flat portion.

Another conventionally known touch panel is provided with a surface having a concave portion with a curved surface (smooth surface without corners) that has a cross-section of an arc (for example, refer to Japanese Unexamined Patent Application, First Publication No. 2012-175642).

Another conventionally known input device is composed of a rotating operation body that has a planar surface and a curved surface that continues to the planar surface (for example, refer to Japanese Unexamined Patent Application, First Publication No. 2009-193521). The planar surface is provided in contact with a rotating shaft in the cross-section. The curved surface is curved in the axial direction as it goes radially outward.

### SUMMARY OF THE INVENTION

In the aforementioned conventional devices and sensors, when a combination of a mechanical switch and a touch sensor is used, convex/concave portions should be provided on the surface of the mechanical switch, in order to ensure proper operation while driving the vehicle. However, for the gesture operations on the surface of the touch sensor, it is desirable to reduce the unevenness on the surface which may inhibit movement of a finger.

In view of the aforementioned circumstances, an aspect of the present invention has an object of providing an operating device for a vehicle that can ensure a proper operability of a mechanical switch, while ensuring smooth finger movement in a gesture operation.

In order to solve the aforementioned problems and achieve the related object, the operating device for a vehicle according to the present invention employs the following.
(1) According to an aspect of the present invention, an operating device for a vehicle includes: a holding portion provided at a steering wheel of the vehicle and adapted to be held by an operator; a first operation member provided on a surface of the holding portion, the first operation member having a first operating surface that is operatable by a finger of the operator through a contact operation and through a tilting operation; and a second operation member provided at a central portion of the first operating surface, the second operation member having a second operating surface that is operatable by the finger of the operator through a contact operation and through a pressing operation, wherein the first operating surface has an annular concave shape with the central portion being furthest recessed to an inside.
(2) In the aspect described in aforementioned (1), the second operating surface may have a shape that is curved in a convex shape protruding toward the operator.
(3) In the aspect described in aforementioned (1) or (2), a boundary between the first operating surface and the second operating surface may be located on a surface of the annular concave shape.
(4) In the aspects described in aforementioned (1) to (3), the operating device for the vehicle may further include four concave grooves, wherein the concave grooves extend in four orthogonal directions, and each of the concave grooves extends from the central portion to an outer peripheral portion of the first operating surface.

According to the aspect described in aforementioned (1), the first operating surface has an annular concave shape (funnel shape, annular conical concave shape, annular basin shape) and is operatable through a contact operation and a tilting operation by a finger of the operator. Therefore, when the finger of the operator moves more than a predetermined amount on the first operating surface, the finger of the operator automatically leaves the first operating surface. Thus, it is possible to facilitate the execution of the gesture operation, such as swipe or the like constituted by the contact movement of the finger on the first operation surface and the leaving of the finger from the first operation surface, thereby improving the operability. Further, the first operating surface is formed in an annular concave shape, in contrast with the second operating surface, provided at the center part of the first operating surface, being formed in a planar shape. Therefore, the first and second operating surfaces are clearly distinguishable using only the tactile sensation of the finger without the need to visually recognize the two operation surfaces. Thus, the operator can perform the distinct operations for the first and second operating members, and operate the device quickly and efficiently. Further, it is possible to efficiently execute the gesture operation of the rotation around the second operating surface, since the first operating surface has an annular concave shape.

According to the aspect described in aforementioned (2), it is possible to further clearly distinguish between the first operating surface and the second operating surface, using only the feeling of the finger.

According to the aspect described in aforementioned (3), by placing the boundary on the surface of the annular concave shape, as compared to the case of placing the boundary on or next to a concave or convex surface, unevenness at the boundary during the operation across the ends of first and second operating surfaces can be avoided. Thus, a smooth operability is ensured when the finger performs contact movement across the boundary, in gesture operations such as swiping on the first operating surface and the second operating surface.

According to the aspect described in aforementioned (4), in gesture operations like swiping, the operator can appropriately recognize the vertical and horizontal directions through sense of touch with the fingers, without the need to visually distinguish between the first operating surface and the second operating surface. Further, when a rotation gesture operation is performed around the second operating surface over the concave grooves, the operator can accurately recognize the amount of operation (namely, the amount of rotation of the finger) by the sense of touch of the finger, without the need to look at the first operating surface and the second operation surface. The operability is thereby improved.

### BRIEF DESCRIPTION OF THE DRAWINGS

FIG. 1 is a perspective view showing an operating surface of an operating device for a vehicle according to an embodiment of the present invention.
FIG. 2 is a configuration diagram of the operating device for a vehicle according to this embodiment of the present invention.
FIG. 3 is a functional block diagram of the operating device for a vehicle according to this embodiment of the present invention.
FIG. 4 is a sectional view of an operating surface of the operating device for a vehicle according to this embodiment of the present invention.
FIG. 5 is a plan view showing an operating surface of an operating device for a vehicle according to a first modified example of the present invention.
FIG. 6 is a sectional view showing an operating surface of an operating device for a vehicle according to a second modified example of the present invention.

### DETAILED DESCRIPTION OF THE INVENTION

Hereinbelow, an operating device for a vehicle according to an embodiment of the present invention will be described with reference to the attached drawings.

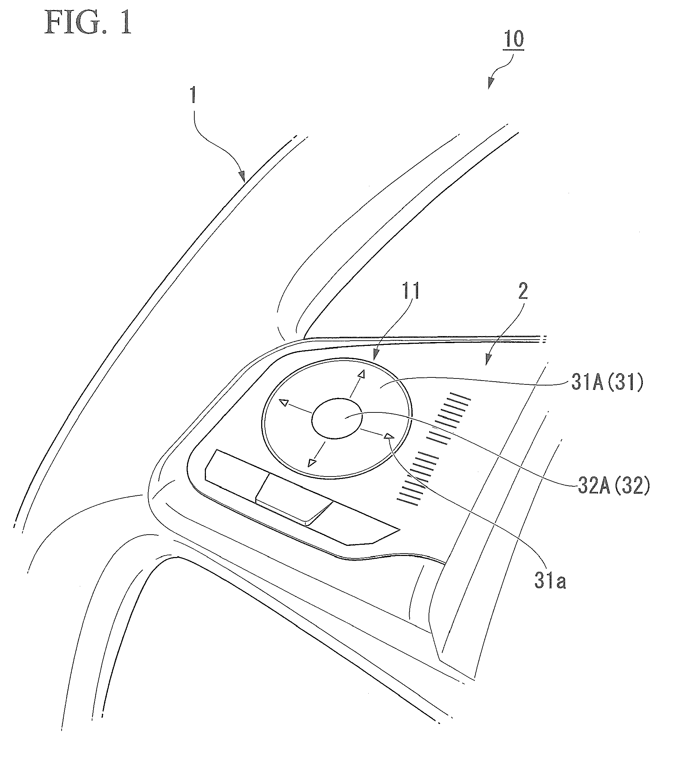

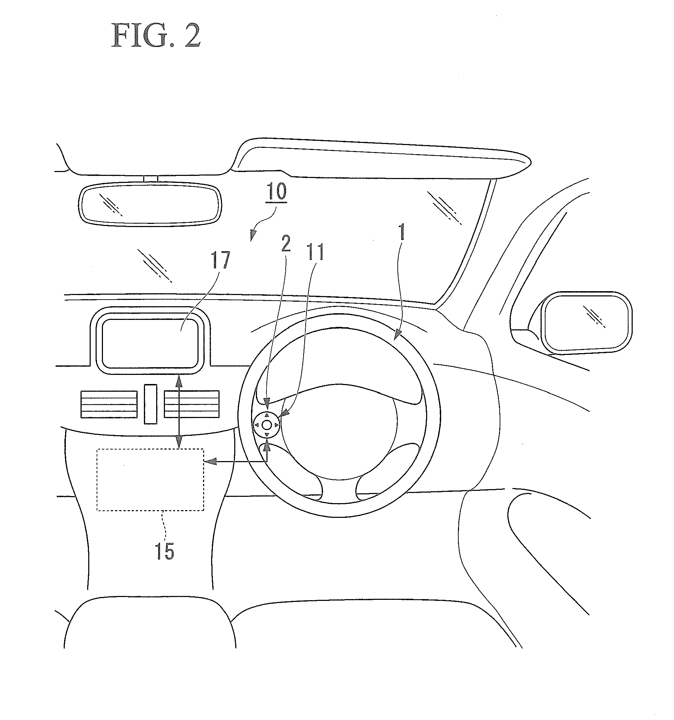

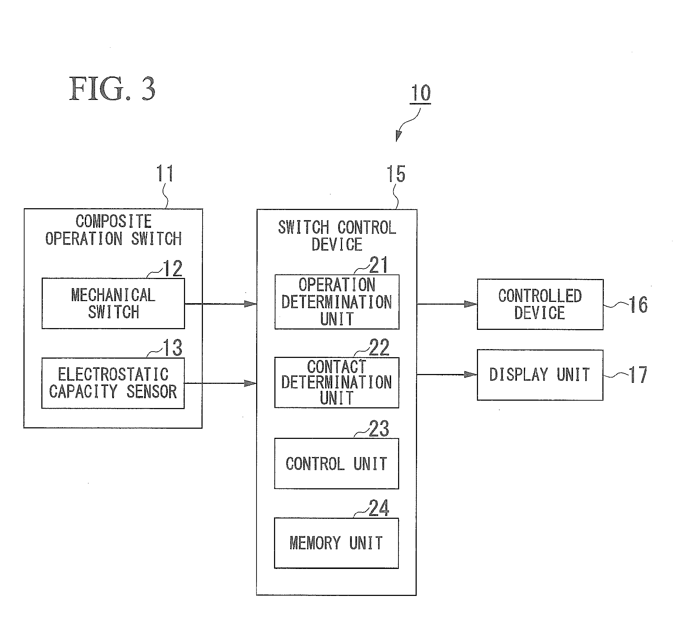

As shown in FIGs. 1 and 2, the operating device for the vehicle 10 according to the present embodiment includes the composite operation switch 11 disposed on the holding portion 2. The operator can hold the holding portion 2, which is provided at the steering wheel 1 of the vehicle. As shown in FIG. 3, the composite operation switch 11 includes the mechanical switch 12 and the electrostatic capacity sensor 13. In the constitution of the composite operation switch 11, the electrostatic capacity sensor 13 overlaps on the mechanical switch 12. The composite operation switch 11 can detect tilting operation and pressing operation by the finger of the operator through the mechanical switch 12. The composite operation switch 11 can also detect gesture operations by the finger of the operator through the electrostatic capacity sensor 13. The gesture operations are made of elements such as proximity, contact, and movement while in contact with the surface, leaving, and others. The gesture operations include swipes, rotations, taps, flicks, pinches, zooms, and the like.

The operating device for the vehicle 10 includes the switch control device 15 connected to the composite operation switch 11. The switch control device 15 is an ECU (Electronic Control Unit), and is configured with a CPU (Central Processing Unit), a memory medium such as RAM (Random Access Memory) or ROM (Read Only Memory), and an electronic circuit such as a timer or the like.

The switch control device 15 includes an operation determination unit 21, a contact determination unit 22, a control unit 23, and a memory unit 24.

The operation determination unit 21 determines whether a tilt operation has been performed by the finger of the operator, according to a tilt detection signal output from the mechanical switch 12. The operation determination unit 21 also determines whether a press operation has been performed by the finger of the operator, according to a press detection signal output from the mechanical switch 12.

The contact determination unit 22 determines whether a gesture operation has been performed by the finger of the operator, according to a detection signal output from the electrostatic capacity sensor 13.

According to the determination results of the operation determination unit 21 or the contact determination unit 22, the control unit 23 outputs various control signals to controlled devices 16, and also outputs another control signal to the display unit 17 instructing to visually present a display screen to the operator. The presented display screen corresponds to the operation of the operator to the composite operation switch 11. The controlled devices 16 are, for example, various devices in the vehicle such as an air conditioner, audio equipment, and a navigation device.

The memory unit 24 stores various data such as the threshold values used in the determination processes of the operation determination unit 21 and the contact determination unit 22.

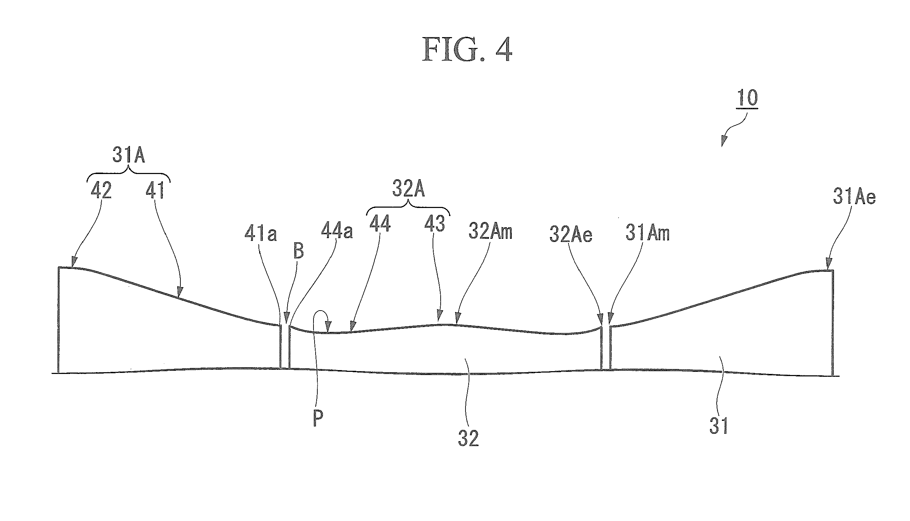

As shown in FIGs. 1 and 4, the composite operation switch 11 includes a first operating member 31 and a second operating member 32. The first operating member 31 includes a first operating surface 31A. The first operating surface 31A functions as the mechanical switch 12 that can be operated through tilting operations, and also functions as the electrostatic capacity sensor 13 that can be operated through gesture operations.

The second operating member 32 includes a second operating surface 32A. The second operating surface 32A functions as the mechanical switch 12 that can be operated through pressing operations, and also functions as the electrostatic capacity sensor 13 that can be operated through gesture operations.

The first operating surface 31A and the second operating surface 32A are the detection surfaces of the electrostatic capacity sensor 13. The first operating surface 31A of the first operating member 31 is configured to be tiltable in each of a plurality of different directions towards the outer edge portion 31Ae from the central portion 31Am on the first operating surface 31A. These tilting directions may be, for example, four mutually orthogonal directions, first to fourth directions. In other words, the tilting directions may be an upward direction, a right direction, a downward direction, and a left direction, when the steering wheel 1 is in the standard neutral position. When the first operating surface 31 A is tilted so that internal contacts corresponding to the tilt direction are turned into a conducting state, and the first operating member 31 outputs a tilt detection signal corresponding to the tilt direction. When the second operating surface 32A is pressed so that the internal contacts are turned into a conducting state, the second operating member 32 outputs a press detection signal. As shown in FIG. 1, marks 31a having a predetermined shape (for example, a triangular shape) are drawn on the first operating surface 31A, in order to indicate the tiltable directions to the operator.

The first operating surface 31A is disposed so as to be exposed on the surface of the holding portion 2. The second operating surface 32A is disposed so as to be exposed at the central portion 31Am of the first operating surface 31A. The second operating surface 32A is surrounded by the first operating surface 31A.

As shown in FIG. 4, the first operating surface 31A includes the first shape surface 41 and the second shape surface 42. The first shape surface 41 has an annular concave shape (a funnel shape, an annular conical concave shape, an annular basin shape) with the central portion 31Am thereof being recessed most away from the operator. In other words, the first shape surface 41 has the largest diameter at the position closest to the operator, and as the surface goes recessed further away from the position of the operator's eyes, the diameter gradually becomes smaller. As a result, the first shape surface 41 has a flipped-cone shape. The second shape surface 42 is curved in a convex shape toward the operator. The second shape surface 42 smoothly connects the first shape surface 41 with the outer edge portion 31Ae. The second shape surface 42 has less steeper slope than the first shape surface 41, and the slope becomes even less steep towards the outer edge portion 31Ae.

The second operating surface 32A includes the third shape surface 43 and the fourth shape surface 44. The third shape surface 43 is curved in a convex shape toward the operator at the central portion 32Am The fourth shape surface 44 is curved concavely away from the operator. The fourth shape surface 44 smoothly connects the third shape surface 43 with the outer edge portion 32Ae. The end portion 44a forms a boundary B with the end portion 41 a of the first shape surface 41 of the first operating surface 31A. The fourth shape surface 44 has an annular concave shape at the end portion 44a, so as to be smoothly connected with the annular concave shape of the first operating surface 31A. In other words, the boundary B between the first operating surface 31A and the second operating surface 32A is provided at a position away toward the first shape surface 41 from the starting point P of the curved shape of the concave of the fourth shape surface 44.

The operating device for the vehicle 10 according to the present embodiment has the aforementioned configuration. In the following sections, the operation of the operating device for the vehicle 10 will be described.

When the first operating surface 31A of the first operating member 31 is tilted to one of the four directions by the finger of the operator, the mechanical switch 12 outputs a tilting detection signal corresponding to the tilting direction. According to this tilting detection signal output from the mechanical switch 12, the operation determination unit 21 determines that a tilting operation has been performed by the finger of the operator. According to the determination result of the operation determination unit 21, the control unit 23 outputs a predetermined control signal corresponding to the tilting direction of the tilting operation to the controlled device 16.

When the second operating surface 32A of the second operating member 32 is pressed by the finger of the operator, the mechanical switch 12 outputs the press detection signal. According to this press detection signal output from the mechanical switch 12, the operation determination unit 21 determines that a pressing operation has been performed by the finger of the operator. The control unit 23 outputs to the controlled device 16 a predetermined control signal corresponding to the pressing operation according to the determination result of the operation determination unit 21.

The first operating surface 31A and the second operating surface 32A are the detection surfaces for the electrostatic capacity sensor 13. When the finger of the operator performs a gesture operation on those detection surfaces, the electrostatic capacity sensor 13 outputs a detection signal corresponding to the change of the electrostatic capacity. Such swipe gesture operation may include moving of the finger while in contact with the surface for any distance and at any speed, and then moving the finger away from the surface. The contact determination unit 22 then determines that a swipe gesture operation has been performed by the finger of the operator, according to the detection signal output from the electrostatic capacity sensor 13. In accordance with this determination result of the contact determination unit 22, the control unit 23 outputs a predetermined control signal corresponding to the gesture operation of the swipe to the controlled device 16.

When a rotation gesture is performed on the first operating surface 31A and the second operating surface 32A, the electrostatic capacity sensor 13 outputs the detection signal corresponding to the change of the electrostatic capacity. Such a rotation gesture may include a rotation of the finger of the operator while in contact with the surface, with the center of the rotation at the second operating surface 32A. According to the detection signal output from the electrostatic capacity sensor 13, the contact determination unit 22 determines that the gesture operation of the rotation has been performed by the finger of the operator. In accordance with the determination result of the contact determination unit 22, the control unit 23 outputs a predetermined control signal corresponding to the gesture operation of the rotation to the controlled devices 16.

As described above, according to the operating device for the vehicle 10 of the present embodiment, the first operating surface 31A is capable of the contact operation and the tilting operation by the finger of the operator, and is formed in the annular concave shape. Therefore, when the finger of the operator moves more than a predetermined amount on the first operating surface 31A, the finger of the operator automatically leaves from the first operating surface 31A. Thus, it is possible to facilitate the execution of the gesture operations, such as swipe, which includes moving the finger wile in touch with the first operating surface 31A and then withdrawing the finger from the first operating surface 31 A. Thereby, the operability of the operating device is improved. Further, the operating device for the vehicle 10 has the first operating surface 31A having the annular concave shape, which makes a clear contrast with the shape of the second operating surface 32A provided in the central portion 31Am of the first operating surface 31A. Thus, the two operating surfaces can be clearly distinguished between using only the sense of touch of the finger without the need to visually recognize the first operating surface 31A and the second operating surface 32A. Thus, the operation for the first operating member 31 and the operation for the second operation member 32 can be clearly distinguished, and the device can be operated quickly and efficiently. Further, rotation gesture operations around the second operating surface 32A can be efficiently executed on the first operating surface 31A having the annular concave shape.

The boundary B between the first operating surface 31A and the second operating surface 32A is placed on the annular concave shape surface, unlike other constitutions in which, for example, the boundary B is placed on a concave shape surface, a convex shape surface or on the edge of a concave or convex shape. Therefore, it is possible to avoid unevenness around the boundary B between the end portion 41a of the first operating surface 31A and the end portion 44a of the second operating surface 32A. Thus, in gesture operations such as the swipe on the first operating surface 31A and on the second operating surface 32A, when the finger moves on the surface across the boundary B, a smooth operability is ensured.

### (The First Modified Example)

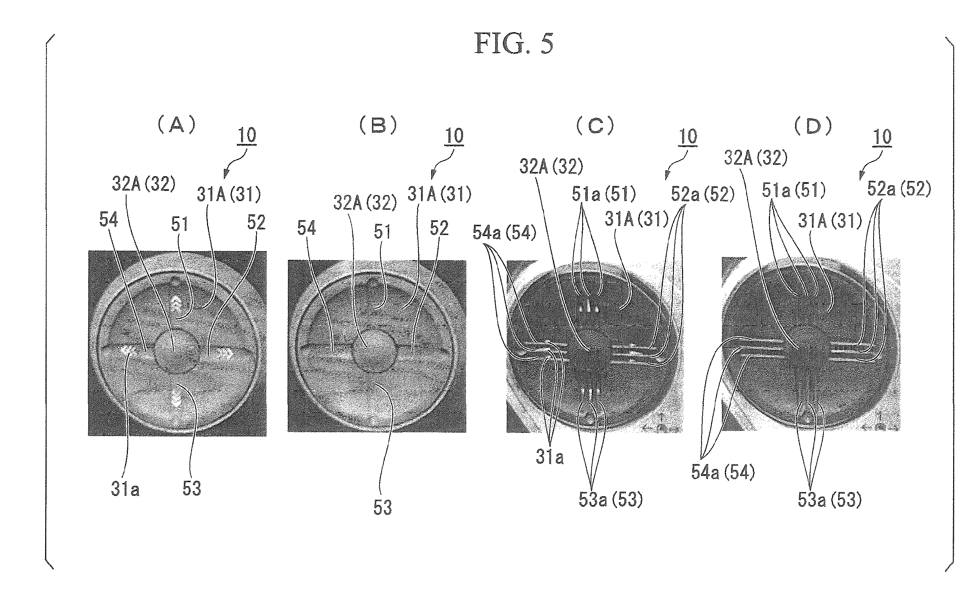

The embodiment described above may be modified into the first modified examples as shown in FIG. 5, parts (A) to (D). In these modified examples, four concave grooves 51, 52, 53, and 54, may be formed on the first operating surface 31A, each extending in a different direction, from the central portion 31Am toward the outer edge portion 31Ae. The grooves may extend in four mutually orthogonal directions, each corresponding to a tiltable direction of the first operating surface 31A. In other words, the grooves may extend in upward, right, down, and the left directions, the directions defined with the steering wheel 1 at the standard neutral position.

Each of the four concave grooves 51, 52, 53, and 54 maybe a single concave groove as shown in FIG. 5, parts (A) and (B), or may be configured by a plurality of concave grooves as shown in FIG. 5, parts (C) and (D). For example, the first concave groove 51 shown in FIG. 5, parts (C) and (D) includes a plurality (for example, three) of the concave grooves 51a. The second concave groove 52 includes a plurality (for example, three) of the concave grooves 52a. The third concave groove 53 includes a plurality (for example, three) of the concave grooves 53a. The fourth concave groove 54 includes a plurality (for example, three) of the concave grooves 54a.

In addition, as shown in FIG. 5, parts (A) and (C), in each of four concave grooves 51, 52, 53, and 54, a mark 31a having a predetermined shape (for example, triangle shape) may be printed, drawn or otherwise shown, in order to indicate the tiltable directions of the first operating surface 31A to the operator.

According to this first modified example, there is no need to visually recognize the first operating surface 31A and the second operating surface 32A. The operator can accurately recognize, using the sense of touch of the finger, the vertical and horizontal directions during the gesture operations, such as swipe. Further, when a gesture operation for rotation around the second operating surface 32A is executed across the respective concave grooves 51, 52, 53, and 54, there is no need to visually recognize the first operating surface 31A and the second operating surface 32A. The operator can accurately recognize, using the sense of touch of the finger, the operating amount (in other words, the amount of rotation of the finger). The device provides an improved operability through this configuration.

### (The Second Modified Example)

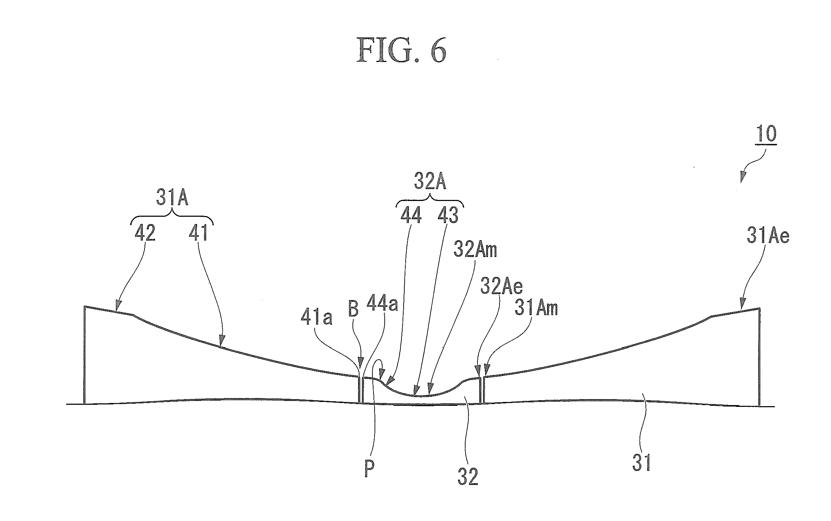

The embodiment described above may be modified into the second modified example, as shown in FIG. 6. In this example, the second operating surface 32A includes a third shape surface 43 and a fourth shape surface 44. The third shape surface 43 is curved away from the operator in a concave shape, in the central portion 32Am. The fourth shape surface 44 is curved convexly toward the operator, and has a shape that smoothly extends to the third shape surface 43 at the outer edge portion 32Ae.

In this second modified example, the end portion 44a of the fourth shape surface 44 forms a boundary B together with the end portion 41 a of the first shape surface 41 of the first operating surface 31A. At the boundary B, the fourth shape surface 44 has an annular concave shape that extends smoothly and continuously to the annular concave shape of the first operating surface 31A. In other words, the boundary B between the first operating surface 31A and the second operating surface 32A is provided at a position that is toward the first shape surface 41 away from the starting point P of the convex curved shape of the fourth shape surface 44.

The embodiments described above are merely examples of the present invention in practice, and are not intended to be interpreted as limitting the scope of the invention.

This operating device for a vehicle includes: a holding portion provided at a steering wheel of the vehicle and adapted to be held by an operator; a first operation member provided on a surface of the holding portion, the first operation member having a first operating surface that is operatable by a finger of the operator through a contact operation and through a tilting operation; and a second operation member provided at a central portion of the first operating surface, the second operation member having a second operating surface that is operatable by the finger of the operator through a contact operation and through a pressing operation, wherein the first operating surface has an annular concave shape with the central portion being furthest recessed to an inside.

## Claims

1. An operating device for a vehicle comprising:
a holding portion provided at a steering wheel of the vehicle and adapted to be held by an operator;
a first operation member provided on a surface of the holding portion, the first operation member having a first operating surface that is operatable by a finger of the operator through a contact operation and through a tilting operation; and
a second operation member provided at a central portion of the first operating surface, the second operation member having a second operating surface that is operatable by the finger of the operator through a contact operation and through a pressing operation, wherein
the first operating surface has an annular concave shape with the central portion being furthest recessed to an inside.

2. The operating device for the vehicle according to Claim 1, wherein
the second operating surface has a shape that is curved in a convex shape protruding toward the operator.

3. The operating device for the vehicle according to Claim 1 or 2, wherein
a boundary between the first operating surface and the second operating surface is located on a surface of the annular concave shape.

4. The operating device for the vehicle according to any one of Claims 1 to 3, further comprising four concave grooves, wherein the concave grooves extend in four orthogonal directions, and each of the concave grooves extends from the central portion to an outer peripheral portion of the first operating surface.
